# EUROPÄISCHE PATENTSCHRIFT

(11) **EP 2 036 004 B1**
(45) Veröffentlichungstag und Bekanntmachung des Hinweises auf die Patenterteilung: **21.07.2010**
(21) Anmeldenummer: 07764383.1
(22) Anmeldetag: 19.06.2007
(51) Int. Cl.: G06K 13/08

(54) **VORRICHTUNG ZUR AUFNAHME EINER SIM-KARTE**
APPARATUS FOR HOLDING A SIM CARD
DISPOSITIF POUR ACCUEILLIR UNE CARTE SIM

(30) Priorität: 05.07.2006 DE 102006031421; 25.05.2007 DE 102007024714
(43) Veröffentlichungstag der Anmeldung: 18.03.2009
(73) Patentinhaber: Peiker, Andreas, 61381 Friedrichsdorf (DE)
(72) Erfinder: Peiker, Andreas, 61381 Friedrichsdorf (DE)
(74) Vertreter: Otten, Herbert
(86) Internationale Anmeldenummer: PCT/DE2007/001079
(87) Internationale Veröffentlichungsnummer: WO 2008/003284

(56) Entgegenhaltungen:
- EP-A- 0 768 613
- US-A1- 2002 192 991

## Beschreibung

Die Erfindung betrifft eine Vorrichtung zur Aufnahme einer SIM-Karte gemäß dem Oberbegriff des Anspruchs 1.

Aus der US 2002/0192991 A1 ist ein Kartenleser zum Einbau in ein Gehäuse eines Geräts bekannt, welcher eine sogenannte Push-Push-Mechanik aufweist, durch welche die Karte durch wiederholtes Drücken der Karte in eine Einschubrichtung in eine Leseposition einrastbar und aus der Leseposition in eine Entnahmeposition ausrastbar ist. Bei Vorrichtungen, welche derartige Kartenleser umfassen, ist die Handhabung der Karte schwierig.

Der Erfindung liegt die Aufgabe zugrunde, eine Vorrichtung zur Aufnahme einer SIM-Karte zu entwickeln, welche einen Push-Push-Mechanismus verwendet und bei welcher die SIM-Karte aber zu einer Umgebung der Vorrichtung vollständig verdeckbar in der Vorrichtung anordenbar ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Die erfindungsgemäße Vorrichtung zur Aufnahme einer SIM-Karte sieht vor, den SIM-Kartenleser auf einer Wippe anzuordnen, wobei die Wippe in einem Schacht eines Gehäuses zwischen zwei Endpositionen schwenkbar aufgehängt ist, wobei der SIM-Kartenleser durch einen Deckel verblendet ist, wobei der Deckel in einer ersten Endposition der Wippe den Schacht verschließt und wobei der Deckel in einer zweiten Endposition der Wippe gegen einen Rückstellmechanismus in die Einschubrichtung der SIM-Karte verschiebbar ist. Hierdurch ist es möglich die SIM-Karte in der zweiten Endposition bequem in der Einschubrichtung zu betätigen und zwischen der Freigabeposition und der Leseposition umzuschalten, da sich der Deckel, welcher den SIM-Kartenleser und die SIM-Karte abdeckt zusammen mit der SIM-Karte in die Einschubrichtung bewegen lässt. Hierdurch ist es nicht erforderlich, dass die SIM-Karte in der Leseposition für eine bequeme Betätigung unter dem Deckel hervorsteht und somit kann der Deckel den Schacht in seiner ersten Endposition spaltfrei abdecken, wenn die SIM-Karte in der Leseposition steht. Kern der Erfindung ist somit eine mit der Push-Push-Mechanik des SIM-Kartenlesers parallel verschiebbare Abdeckung des SIM-Kartenlesers.

Unter einer SIM-Karte wird im Sinne der Erfindung neben einer SIM-Karte für ein Mobiltelefon jeder kartenförmige Informationsträger verstanden, welcher Informationen speichern kann. Hierbei kann es sich beispielsweise um einen elektrischen, optischen oder magnetischen Informationsträger handeln. Insbesondere sind unter dem Begriff SIM-Karte auch Speicherkarten wie zum Beispiel SD-Karten und Memorysticks zu verstehen. Auch kartenförmige Festplatten fallen im Sinne der Erfindung unter den Begriff SIM-Karte. Unter einem SIM-Kartenleser sind im Sinne der Erfindung alle Kartenleser zu verstehen, welche geeignet sind die vorgenannten Karten zu lesen.

Weitere Einzelheiten der Erfindung werden in der Zeichnung anhand von schematisch dargestellten Ausführungsbeispielen beschrieben.

Hierbei zeigt:
- Fig. 1: eine Seitenansicht auf eine erfindungsgemäße Vorrichtung, bei welcher die Wippe in einer ersten Endposition steht;
- Fig. 2: eine geschnittene Detaildarstellung der in der Figur 1 gezeigten Vorrichtung im Bereich der Wippe;
- Fig. 3: eine Seitensicht auf die in den Figuren 1 und 2 gezeigte Vorrichtung, bei welcher die Wippe in einer zweiten Endposition steht;
- Fig. 4: eine geschnittene Detaildarstellung der in der Figur 3 gezeigten Vorrichtung im Bereich der Wippe,
- Fig. 5: eine perspektivische Ansicht der Vorrichtung, bei welcher die Wippe in der zweiten Endposition steht,
- Fig. 6: eine Draufsicht auf die Vorrichtung in eine in der Figur 1 gezeigte Richtung VI und
- Figur 7: einen Schnitt durch die Vorrichtung entsprechend der in der Figur 1 gezeigten Schnittlinie VII-VII.

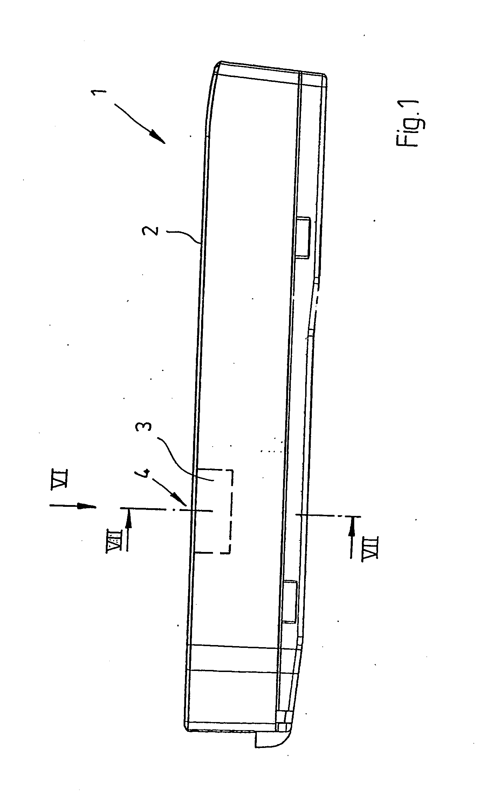

In der Figur 1 ist eine erfindungsgemäße Vorrichtung 1 in Seitenansicht dargestellt. Die Vorrichtung 1 ist dafür vorgesehen, in eine nicht dargestellte Ausnehmung einer Mittelkonsole oder eines Armaturenbretts eines Fahrzeugs eingebaut zu werden. Zu einer Oberseite 2 weist die Vorrichtung 1 einen mit gestrichelten Linien schematisch angedeuteten Schacht 3 auf, welcher durch einen Deckel 4 verschlossen ist.

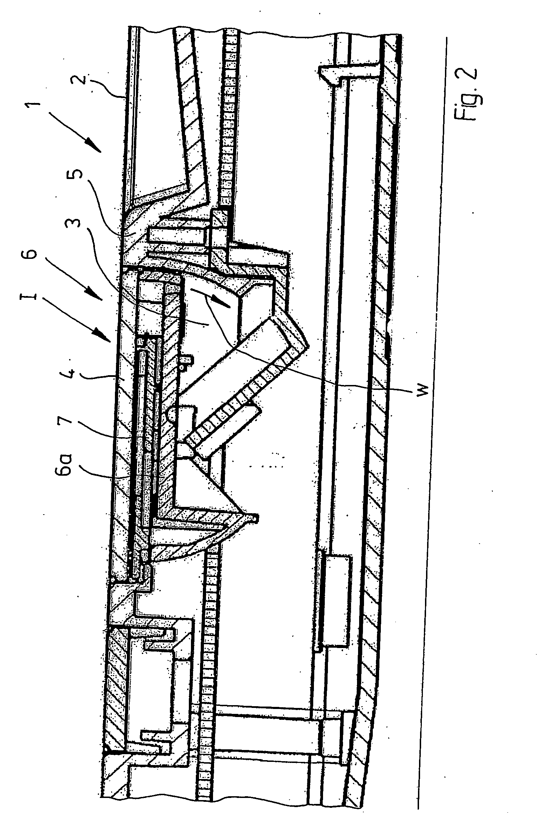

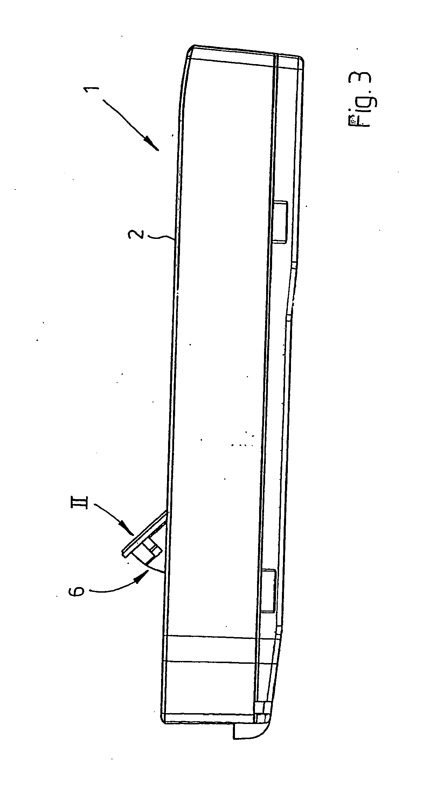

In der Figur 2 ist die in der Figur 1 dargestellte Vorrichtung 1 im Bereich des Deckels 4 geschnitten dargestellt. Im wesentlichen umfasst die Vorrichtung 1 ein Gehäuse 5 und eine Wippe 6, welche in dem Gehäuse 5 schwenkbar gelagert ist. Die Wippe 6 wiederum umfasst einen Träger 6a, einen SIM-Kartenleser 7 und den Deckel 4. In der Figur 2 steht die Wippe 6 waagrecht in einer ersten Endposition I, in welcher der Deckel 4 der Wippe 6 den Schacht 3 abschließt, wobei der Deckel 4 bündig in der Oberseite 2 der Vorrichtung 1 liegt. Aus der in der Figur 2 dargestellten Endposition I ist die Wippe 6 in eine Drehrichtung w in eine zweite Endposition II schwenkbar, welche in der Figur 3 dargestellt ist. Analog zu der Figur 1 zeigt die Figur 3 wiederum eine Seitenansicht auf die Vorrichtung 1, wobei die Wippe 6 etwa zur Hälfte über die Oberseite 2 der Vorrichtung 1 hinausragt.

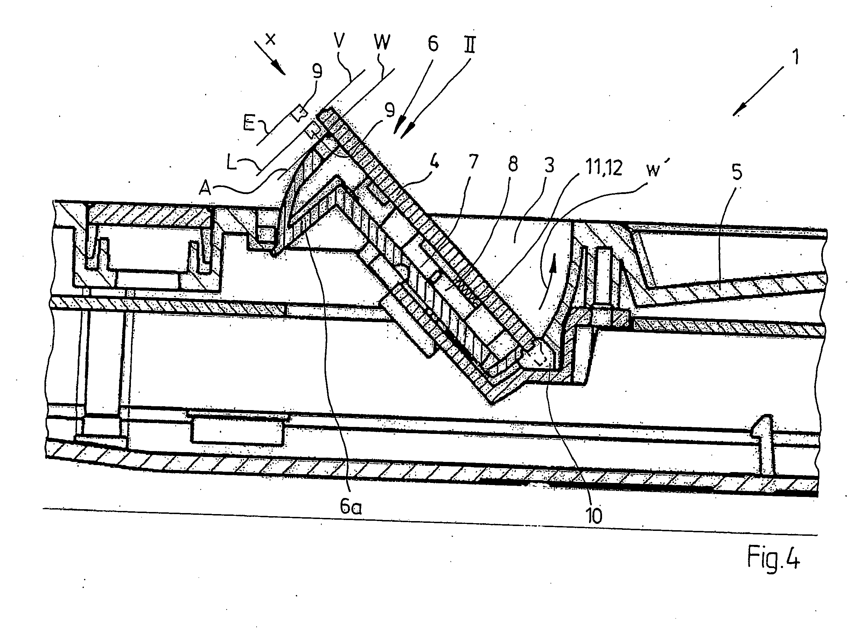

Die Figur 4 zeigt eine Detailansicht der Vorrichtung 1 im Bereich der Wippe 6 in einer Schnittdarstellung. Der SIM-Kartenleser 7 umfasst ein sogenannte Push-Push-Mechanik 8, welche einen Wechsel zwischen einer Leseposition L, einer in dem SIM-Kartenleser 7 steckenden SIM-Karte 9 und einer Entnahmeposition E der in dem SIM-Kartenleser steckenden SIM-Karte 9 erlaubt. Dieser Wechsel zwischen der Leseposition L und der Entnahmeposition E der SIM-Karte 9 ist durch ein wiederholtes Einschieben der SIM-Karte 9 in eine Einschubrichtung x möglich. Hierbei wird die SIM-Karte 9 jeweils bis in eine Auslöseposition A in die Einschubrichtung x in den SIM-Kartenleser 7 eingeschoben. Um dieses Einschieben zu erleichtern und Verletzungen bzw. Beschädigungen des Fingernagels zu vermeiden, ist der Deckel 4 in der in der Figur 4 dargestellten zweiten Endposition II der Wippe 6 ebenfalls in die Einschubrichtung x aus einer dargestellten Stellung V in eine Stellung W verschiebbar. Somit können die SIM-Karte 9 und der Deckel 4 gemeinsam in die Auslöseposition A verschoben werden. Die Verschiebbarkeit des Deckels 4 wird durch einen Rücksprung 10 ermöglicht, welcher in dem Schacht 3 ausgebildet ist, in welchem die Wippe 6 schwenkbar aufgehängt ist. In dem Rücksprung 10 ist der Deckel 4 mit gestrichelten Linien in der Stellung W angedeutet. Der Deckel 4 ist gegenüber dem SIM-Kartenleser 7 über einen Rückstellmechanismus 11 abgefedert, wobei der Rückstellmechanismus 11 im wesentlichen durch eine Feder 12 gebildet ist. Gemäß einer nicht dargestellten Ausführungsvariante ist es auch vorgesehen, den Rückstellmechanismus an dem Gehäuse im Rücksprung 10 anzuordnen. Hierdurch wird der Aufbau der Wippe vereinfacht Aus der Stellung II lässt sich die Wippe 6 durch eine Drehung in eine Pfeilrichtung w' wieder in die in der Figur 2 gezeigte erste Stellung zurückstellen. Dies ist jedoch nur möglich, wenn der Deckel in der Stellung V steht.

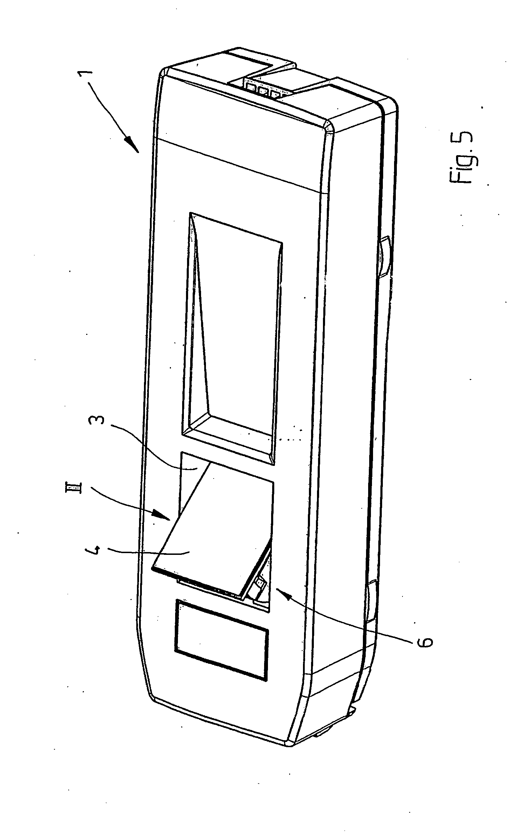

In der Figur 5 ist die aus den Figuren 1 bis 4 bekannte Vorrichtung 1 noch in perspektivischer Ansicht dargestellt, wobei die Wippe 6 in der zweiten Endposition II schräg in dem Schacht 3 steht. In dieser zweiten Endposition II ist das Einschieben und Herausnehmen der hier nicht dargestellten SIM-Karte möglich.

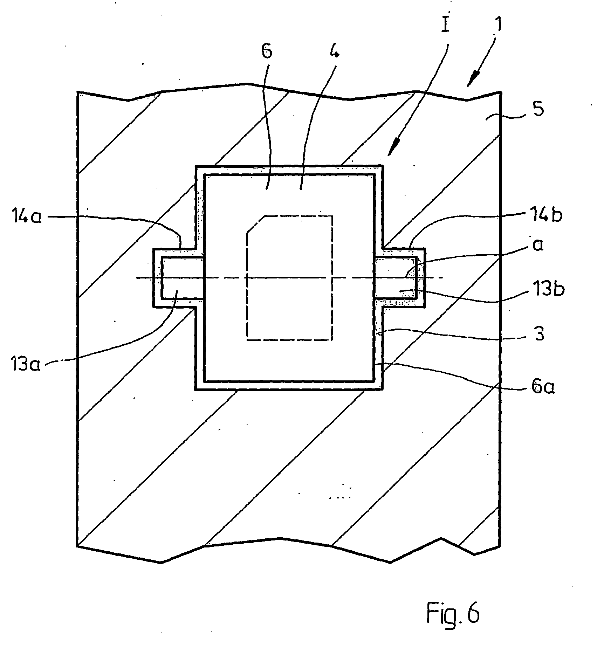

In der Figur 6 ist eine schematische Draufsicht auf die Vorrichtung 1 in eine in der Figur 1 mit einem Pfeil VI angedeutete Richtung dargestellt. In der Draufsicht ist das Gehäuse 5 und der Deckel 4 der Wippe 6 sichtbar. Die Wippe 6 steht in der ersten Endposition I und verschließt hierbei den Schacht 3. Die Wippe 6 ist um eine Schwenkachse a schwenkbar in dem Gehäuse 5 gelagert. Hierzu sind an dem unter dem Deckel 4 liegenden Träger 6a zwei sich gegenüberliegende Zapfen 13a, 13b angeordnet. Die Zapfen 13a, 13b sind in Lagern 14a, 14b gelagert, welche an dem Gehäuse 5 ausgebildet sind. Durch diese drehbare Befestigung der Wippe 6 an dem Gehäuse 5 ist die Wippe 6 über dem Schacht 3 um die Schwenkachse a in die zum Beispiel in der Figur 3 gezeigte zweite Stellung verschwenkbar.

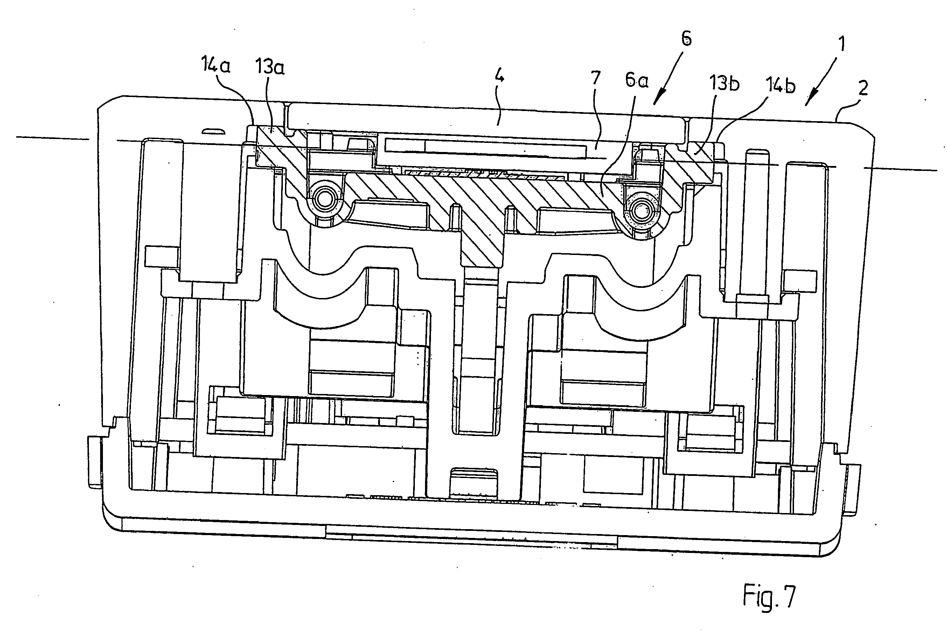

In der Figur 7 ist ein Schnitt durch die Vorrichtung 1 entsprechend der in der Figur 1 gezeigten Schnittlinie VII-VII dargestellt. In der Figur 7 ist nur der Träger 6a durch eine Schraffur gekennzeichnet. Alle anderen geschnittenen Bauteile sind zur Erhaltung der Übersichtlichkeit der Darstellung ohne Schraffur gezeigt. An dem Träger 6a der Wippe 6 sind die Zapfen 13a und 13b direkt angeformt. Der Träger 6a trägt den Deckel 4 der Wippe 6 und der SIM-Kartenleser 7 der Wippe 6 ist zwischen dem Träger 6a und den Deckel 4 aufgenommen. Die Lager 14a und 14b für die Zapfen 13a und 13b sind an dem Gehäuse 5 unterhalb von dessen Oberseite 2 ausgebildet.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche.

### Bezugszeichenliste:

- 1: Vorrichtung
- 2: Oberseite von 1
- 3: Schacht
- 4: Deckel
- 5: Gehäuse
- 6: Wippe
- 6a: Träger
- 7: SIM-Kartenleser
- 8: Push-Push-Mechanik
- 9: SIM-Karte
- 10: Rücksprung
- 11: Rückstellmechanismus
- 12: Feder
- 13a: Zapfen an 6
- 13b: Zapfen an 6
- 14a: Lager für 13a an 5
- 14b: Lager für 13b an 5
- I: erste Endposition von 6
- II: erste Endposition von 6
- a: Schwenkachse von 6
- w: Drehrichtung von 6 von I nach II
- w': Drehrichtung von 6 von II nach I
- x: Einschubrichtung von 9
- A: Auslöseposition von 9
- E: Entnahmeposition von 9
- L: Leseposition von 9
- V: erste Stellung von 4
- W: zweite Stellung von 4

## Patentansprüche

1. Vorrichtung (1) zur Aufnahme einer SIM-Karte (9) mit einem SIM-Kartenleser (7), wobei der SIM-Kartenleser (7) eine Push-Push-Mechanik (8) aufweist, durch welche die SIM-Karte (9) durch wiederholtes Drücken der SIM-Karte (9) in eine Einschubrichtung (x) in eine Leseposition (L) einrastbar und aus der Leseposition (L) in eine Entnahmeposition (E) ausrastbar ist, **dadurch gekennzeichnet, dass** der SIM-Kartenleser (7) auf einer Wippe (6) angeordnet ist, welche in einem Schacht (3) eines Gehäuses (1) zwischen zwei Endpositionen (I, II) schwenkbar aufgehängt ist, wobei der SIM-Kartenleser (7) durch einen Deckel (4) abgedeckt ist, wobei der Deckel (4) in der ersten Endposition (I) der Wippe (6) den Schacht (3) verschließt und wobei der Deckel (4) in der zweiten Endposition (II) der Wippe (6) gegen einen Rückstellmechanismus (11, 12) in die Einschubrichtung (x) der SIM-Karte (9) verschiebbar ist.

2. Vorrichtung nach Anspruch 1, **dadurch gekennzeichnet, dass** der Rückstellmechanismus (11) zwischen dem Deckel (4) und dem SIM-Kartenleser (7) oder zwischen dem Deckel (4) und dem Träger (6a) angeordnet ist.

3. Vorrichtung nach Anspruch 1, **dadurch gekennzeichnet, dass** der Rückstellmechanismus (11) zwischen dem Deckel (4) und dem Gehäuse (5) angeordnet ist.

4. Vorrichtung nach Anspruch 3, **dadurch gekennzeichnet, dass** der Rückstellmechanismus (11) in dem Rücksprung (10) des Schachts (3) angeordnet ist.

5. Vorrichtung nach einem der vorhergehenden Ansprüche, **dadurch gekennzeichnet, dass** die Wippe (6) um eine Schwenkachse (a) gegenüber dem Gehäuse (5) verschwenkbar ist.

6. Vorrichtung nach einem der vorhergehenden Ansprüche, **dadurch gekennzeichnet, dass** die Wippe (6) mit zwei Zapfen (13a, 13b) in Lagern (14a, 14b) des Gehäuses (5) gelagert ist.

## Claims

1. Device (1) for holding a SIM card (9) with a SIM card reader (7), wherein the SIM card reader (7) has a push-push mechanism (8) by means of which the SIM card (9) can be locked into a reading position (L) and unlocked from the reading position (L) into a removal position (E) by repeatedly pressing the SIM card (9) in insertion direction (x), **characterised in that** the SIM card reader (7) is arranged on a rocker (6), which is suspended in a slot (3) of a housing (1) pivoting between two end positions (I, II), wherein the SIM card reader (7) is covered by a cover (4), wherein the cover (4) closes the slot (3) in the first end position (I) of the rocker (6), and wherein the cover (4) in the second end position (II) of the rocker (6) can be pushed against a restoring mechanism (11, 12) in the insertion direction (x) of the SIM card (9).

2. Device according to claim 1, **characterised in that** the restoring mechanism (11) is arranged between the cover (4) and the SIM card reader (7) or between the cover (4) and the carrier (6a).

3. Device according to claim 1, **characterised in that** the restoring mechanism (11) is arranged between the cover (4) and the housing (5).

4. Device according to claim 3, **characterised in that** the restoring mechanism (11) is arranged in the recess (10) of the slot (3).

5. Device according to one of the preceding claims, **characterised in that** the rocker (6) is pivotable about a pivot axis (a) relative to the housing (5).

6. Device according to one of the preceding claims, **characterised in that** the rocker (6) is mounted by two studs (13a, 13b) in bearings (14a, 14b) of the housing (5).

## Revendications

1. Dispositif (1) pour accueillir une carte SIM (9) comportant un lecteur de carte SIM (7),
le lecteur de carte SIM (7) ayant un mécanisme pousse-pousse (8) par lequel :
par une poussée répétée sur la carte SIM (9) dans une direction d'engagement (x) on accroche la carte SIM (9) dans une position de lecture (L) ou de la décrocher de la position de lecture (L) pour passer dans une position d'élément (E),
**caractérisé en ce que**
le lecteur de carte SIM (7) est installé sur une bascule (6) suspendue de manière pivotante entre deux positions de fin de course (I, II) dans un logement (3) d'un boîtier (1),
- le lecteur de carte SIM (7) étant couvert par un couvercle (4),
- le couvercle (4) fermant le logement (3) dans la première position de fin de course (I) de la bascule (6), et
- dans la seconde position de fin de course (II) de la bascule (6), le couvercle (4) coulisse dans la direction d'engagement (x) de la carte SIM (9) contre un mécanisme de rappel (11, 12).

2. Dispositif selon la revendication 1,
**caractérisé en ce que**
le mécanisme de rappel (11) est installé entre le couvercle (4) et le lecteur de carte SIM (7) ou entre le couvercle (4) et le support (6a).

3. Dispositif selon la revendication 1,
**caractérisé en ce que**
le mécanisme de rappel (11) est installé entre le couvercle (4) et le boîtier (5).

4. Dispositif selon la revendication 3,
**caractérisé en ce que**
le mécanisme de rappel (11) est installé dans le décrochage (10) du logement (3).

5. Dispositif selon l'une des revendications précédentes,
**caractérisé en ce que**
la bascule (6) pivote autour d'un axe de pivotement (a) par rapport au boîtier (5).

6. Dispositif selon l'une des revendications précédentes,
**caractérisé en ce que**
la bascule (6) est montée par deux pivots (13a, 13b) dans des paliers (14a, 14b) du boîtier (5).
